Europäisches Patentamt

European Patent Office

Office européen des brevets

(11) Numéro de publication: **0 176 450**
**A1**

(12) # DEMANDE DE BREVET EUROPEEN

(21) Numéro de dépôt: **85420149.8**

(22) Date de dépôt: **08.08.85**

(51) Int. Cl.⁴: **A 47 J 43/24**

(30) Priorité: **14.09.84 FR 8414395**

(43) Date de publication de la demande:
**02.04.86 Bulletin 86/14**

(84) Etats contractants désignés:
**AT BE CH DE GB IT LI LU NL SE**

(71) Demandeur: **Silvin, Hubert**

**F-38138 Les Cotes D'Arey(FR)**

(72) Inventeur: **Silvin, Hubert**

**F-38138 Les Cotes D'Arey(FR)**

(74) Mandataire: **Maureau, Pierre et al,**
**Cabinet GERMAIN & MAUREAU B.P. 3011**
**F-69392 Lyon Cedex 03(FR)**

(54) **Essoreuse, notamment pour salades, fruits et légumes.**

(57) Cette essoreuse est du type comprenant un panier perforé (2) cylindrique ou légèrement conique, monté libre en rotation sur un pivot (3) d'axe vertical porté par un bâti et logé à l'intérieur d'une cuve (6) formant bac de récupération.

Les moyens d'entraînement en rotation du panier (2) sont constitués par un levier (12) monté pivotant autour d'un axe horizontal (11), dont une extrémité accessible de l'extérieur est agencée en pédale (13) et auquel est lié, par au moins l'une (9a) de ses extrémités, un organe souple de transmission (9) tel qu'une chaîne ou une courroie crantée ou non, partiellement enroulée sur une couronne à dents ou à gorge (8) solidaire de la bague extérieure (7b) d'une roue libre (7) dont la bague intérieure (7a) est solidaire du pivot (3) du panier (2), l'ensemble étant monté de manière qu'en actionnant la pédale (13) de haut en bas, le défilement de l'organe souple de transmission (9) entraîne la couronne (7b) dans le sens correspondant à l'entraînement du panier (2) tandis qu'un ressort de rappel (18), lié au levier (12) et au bâti (5) de l'essoreuse, tend à ramener la pédale (13) en position haute, dès qu'elle est libérée de toute contrainte.

./...

Croydon Printing Company Ltd.

FIG.1

0176450

1

## ESSOREUSE, NOTAMMENT POUR SALADES, FRUITS ET LEGUMES

La présente invention concerne une essoreuse, notamment pour salades, fruits et légumes mais pouvant aussi être utilisée pour essorer du linge léger tel que chemises, sous-vêtements ou autres.

Il existe actuellement, pour essorer les salades, fruits et légumes, deux types essentiels de machines, à savoir les machines à entraînement par moteur et celle à entraînement manuel, à l'aide d'une manivelle.

Chacune d'elles comprend, essentiellement, un panier cylindrique perforé destiné à recevoir les produits à essorer, monté pivotant autour d'un axe vertical porté par un bâti, à l'intérieur d'une cuve formant bac de récupération.

Les premières sont d'un prix de revient élevé que seule une utilisation intense peut justifier, ce qui limite leur emploi aux restaurants et collectivités servant de nombreux repas. En outre, à chaque opération d'essorage, elles fonctionnent plusieurs minutes alors qu'un fonctionnement d'environ cinq secondes serait largement suffisant. En effet, au début de la rotation du panier, la force centrifuge qui s'applique aussi bien aux produits à essorer qu'aux gouttes d'eau qui adhèrent sur eux provoque immédiatement l'éjection de l'eau à travers les perforations du panier mais, peu après, les produits tels que les feuilles de salades sont peu à peu plaqués contre la paroi cylindrique du panier dont elles obstruent les perforations. A partir de cet instant, il ne sort du panier qu'une quantité négligeable d'eau, alors que pendant la période transitoire précédente, de deux à trois secondes, environ 85 % de l'eau a été évacuée.

En conséquence, la puissance du moteur n'est utile que pour le lancement du panier à la vitesse d'essorage.

Les secondes sont d'un prix de revient beaucoup plus raisonnable que les premières, ce qui les rend plus accessibles, notamment aux ménages. Par contre, leur fonctionnement manuel limite leur capacité à très peu de portions, ce qui ne permet pas leur emploi par les petits restaurants ou petites collectivités.

La présente invention vise à combler cette lacune. A cet effet, dans l'essoreuse qu'elle concerne et qui est du type précité, les moyens d'entraînement en rotation du panier sont constitués par un levier monté pivotant autour d'un axe horizontal dont une extrémité, accessible de l'extérieur, est agencée en pédale et auquel est lié, par au moins une de ses extrémités, un organe souple de transmission tel qu'une chaîne ou une courroie crantée ou non, partiellement enroulée sur une couronne à dents ou à gorge solidaire de la bague extérieure d'une roue libre dont la bague intérieure est solidaire du pivot du panier, l'ensemble étant monté de manière qu'en actionnant la pédale de haut en bas, le défilement de l'organe souple de transmission entraîne la couronne dans le sens correspondant à l'entraînement du panier, tandis qu'un ressort de rappel lié au levier et au bâti de l'essoreuse tend à ramener la pédale en position haute dès qu'elle est libérée de toute contrainte.

Ainsi, la puissance des muscles d'une jambe étant bien supérieure à celle d'un bras il est possible de prévoir un panier d'une capacité bien supérieure à celle des paniers des essoreuses manuelles connues. Avec l'essoreuse de l'invention deux coups de pédale sont suffisants pour une opération d'essorage, le premier pour la mise en mouvement du panier, le second pour lui faire atteindre sa vitesse d'essorage.

Suivant une forme d'exécution préférée de l'invention la seconde extrémité de l'organe souple de transmission est aussi liée au levier articulé formant pédale, mais en un emplacement situé d'un autre côté de l'axe d'articulation de ce levier par rapport au point d'amarrage de la première extrémité, au moins, une poulie de renvoi d'axe horizontal étant prévue pour guider cet organe souple de transmission entre la couronne de la roue libre et l'une des extrémités de cet organe souple de transmission.

Suivant une autre caractéristique de l'invention, pour permettre une compensation de la différence des courses des points d'amarrage de l'organe souple de transmission, lors de la manoeuvre de la pédale par l'utilisateur, l'extrémité de cet organe souple situé en amont de la couronne est liée au levier par un moyen à ressort de compensation.

Pour procurer à cette essoreuse une meilleure stabilité, son levier de manoeuvre a la forme d'un cadre entourant le bac de récupération dont la traverse antérieure porte la pédale et dont la traverse postérieure porte l'un des points d'amarrage de l'organe souple de transmission.

Pour éviter que les produits à essorer ne s'accumulent au centre du panier tournant où ils ne subiraient aucune force centrifuge, suivant une autre caractéristique de l'invention, le fond du panier tournant porte un bossage central sensiblement conique orienté pointe en haut.

De toute façon, l'invention sera bien comprise à l'aide de la description qui suit en référence au dessin schématique annexé représentant, à titre d'exemple non limitatif, une forme d'exécution de cette essoreuse :

Figure 1 en est une vue en coupe axiale verticale ;

Figure 2 en est une vue partielle en perspective montrant plus particulièrement le mécanisme d'entraînement du panier tournant.

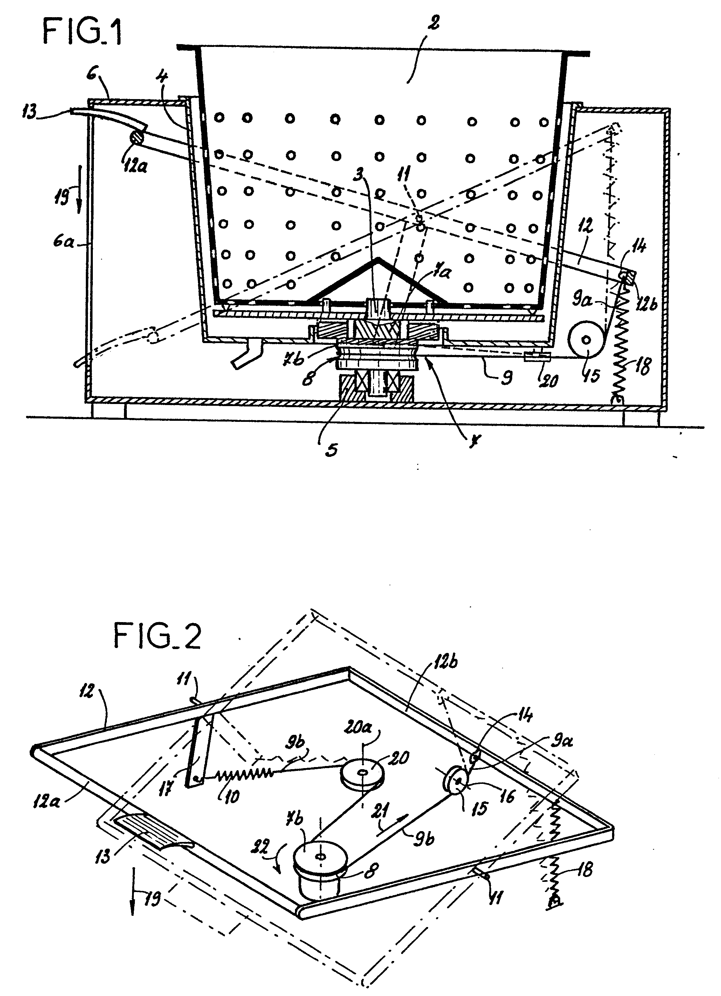

Comme le montre la figure 1, cette essoreuse est du type comprenant un panier perforé (2) cylindrique ou légèrement conique monté libre en rotation sur un pivot vertical (3) et logé à l'intérieur d'une cuve (4) l'enveloppant presque totalement en épousant son profil extérieur et constituant un bac de récupération de l'eau essorée.

Le pivot (3) et la cuve (4) sont portés par un bâti (5) lui-même habillé d'un capotage esthétique (6).

Comme le montre notamment la figure 1, le pivot (3) est entouré d'une roue libre (7) dont la bague intérieure (7a) lui est liée en rotation et dont la bague extérieure (7b) formant couronne présente une gorge trapézoïdale (8) destinée au passage d'une courroie trapézoïdale d'entraînement (9). Sur deux tourillons co-axiaux (11) diamétralement opposés portés par le bâti (5) est articulé un levier de manoeuvre (12) en forme de cadre entourant la cuve (4) dont la traverse antérieure (12a) porte une plaque (13) constituant une pédale et dont la traverse postérieure (12b) porte une patte (14) à laquelle est amarrée l'une (9a) des extrémités de la courroie (9) d'entraînement du panier tournant (2). Entre la patte d'amarrage (14) et la gorge (8) de la bague extérieure (7b) de la roue libre (7), la courroie (9) est guidée par une poulie de renvoi (15) d'axe horizontal (16).

L'autre extrémité (9b) de la courroie (9) est amarrée à une patte (17) solidaire du levier (12) formant un bras radial par rapport à l'axe d'articulation commun constitué par les tourillons (11).

Entre la gorge (8) de la bague extérieure (7b) de la roue libre (7) et la patte d'amarrage (17) de l'extrémité (9b) de la courroie (9), cette dernière est guidée par une poulie de renvoi (20) d'axe vertical (20a).

Enfin, un ressort de rappel (18), liant la traverse postérieure (12b) du levier (12) au bâti (5), tend à ramener constamment le levier (12) en position de repos telle qu'illustrée en traits pleins sur les figures 1 et 2.

Comme le montre la figure 1, la pédale (13) est accessible au pied de l'utilisateur à travers une fenêtre (6a) ménagée dans le capotage (6) et dont la hauteur correspond à la course de la pédale (13). On conçoit aisément qu'en exerçant sur la pédale (13), à l'aide du pied, un effort vertical dirigé de haut en bas comme illustré par la flèche (19), jusque dans sa position montrée en traits mixtes sur le dessin, l'opérateur tend à faire défiler la courroie (9) dans le sens ilustré par la flèche (21), et par conséquent à faire pivoter la couronne présentant la gorge (8) et la bague extérieure (7b) de la roue libre (7) dans le sens de la flèche (22). La roue libre étant montée de manière que la bague extérieure (7b) provoque l'entraînement de la bague intérieure (7a) lorsqu'elle est elle-même entraînée dans le sens de la flèche (22), cette manoeuvre de la pédale (13) dans le sens de la flèche (19) a bien pour effet d'entraîner en rotation le panier (2).

Lorsque la pédale (13) a été amenée dans sa position basse extrême, l'opérateur peut la relâcher de telle sorte qu'elle est aussitôt ramenée par le ressort de rappel (18) en position de départ, prête à un deuxième actionnement, et cela sans effets sur la rotation du panier (2) grâce à la roue libre (7).

Comme le montre le dessin, la cuve (4) présente dans son fond un orifice (23) auquel est raccordé un canal (24) d'évacuation de l'eau essorée à la sortie duquel il est possible de placer n'importe quel récipient de récupération de cette eau.

Pour permettre une compensation de la différence des courses des points d'amarrage (14) et (17) de la courroie (9) au levier (12), lorsqu'il est manoeuvré, l'amarrage de l'extrémité (9b) de la courroie (9) située à la patte (17) est réalisé par l'intermédiaire d'un ressort de compensation (10).

L'emplacement de ce ressort de compensation (10) du côté de l'extrémité (9b) de la courroie (9) est choisi par ce que cette extrémité est située en amont de la roue libre (7) lorsque le levier (12) est manoeuvré dans le sens correspondant à l'entraînement du panier tournant (2).

D'une manière générale, il faut prévoir deux manoeuvres successives de la pédale (13) pour amener le panier (2) à sa vitesse d'essorage, la première manoeuvre ayant pour effet de le lancer, et la seconde de l'accélérer jusqu'à sa vitesse d'essorage.

De préférence le fond du panier (2) porte un bossage central

5

sensiblement conique (2a) dont la présence a pour but d'empêcher que des produits à essorer ne prennent place dans l'axe du panier (2), c'est-à-dire en un emplacement où ils ne subiraient aucune force centrifuge.

Comme on le voit, par rapport aux essoreuses manuelles connues, l'essoreuse de la présente invention présente l'avantage de permettre l'utilisation d'un panier tournant (2) de grande capacité, puisque la force musculaire des jambes est généralement beaucoup plus importante que celle des bras, et que la force transmise à une pédale (13) est bien supérieure à celle qu'un opérateur pourrait transmettre à une manivelle.

· Comme il va de soi et comme il ressort de ce qui précède, l'invention ne se limite pas à la seule forme d'exécution décrite ci-dessus à titre d'exemples non limitatifs ; elle en embrasse, au contraire, toutes les variantes de réalisation.

6

## -REVENDICATIONS-

1. Essoreuse, notamment pour salades, fruits et légumes du type comprenant un panier perforé (2) cylindrique ou légèrement conique, monté libre en rotation sur un pivot (3) d'axe vertical porté par un bâti et logé à l'intérieur d'une cuve (6) formant bac de récupération caractérisée en ce que les moyens d'entraînement en rotation du panier (2) sont constitués par un levier (12) monté pivotant autour d'un axe horizontal (11), dont une extrémité accessible de l'extérieur est agencée en pédale (13) et auquel est lié, par au moins l'une (9a) de ses extrémités, un organe souple de transmission (9) tel qu'une chaîne ou une courroie crantée ou non, partiellement enroulée sur une couronne à dents ou à gorge (8) solidaire de la bague extérieure (7b) d'une roue libre (7) dont la bague intérieure (7a) est solidaire du pivot (3) du panier (2), l'ensemble étant monté de manière qu'en actionnant la pédale (13) de haut en bas, le défilement de l'organe souple de transmission (9) entraîne la couronne (7b) dans le sens (22) correspondant à l'entraînement du panier (2) tandis qu'un ressort de rappel (18) lié au levier (12) et au bâti (5) de l'essoreuse tend à ramener la pédale (13) en position haute, dès qu'elle est libérée de toute contrainte.

2. Essoreuse selon la revendication 1, caractérisée en ce que la seconde extrémité (9b) de l'organe souple de transmission (9) est aussi liée au levier articulé (12) formant pédale (13), en un emplacement situé d'un autre côté de l'axe d'articulation (11) de ce levier, par rapport au point d'amarrage (14) de la première extrémité (9a), au moins une poulie de renvoi (15) d'axe horizontal (16) étant prévue pour guider cet organe souple de transmission (9) entre la couronne (7b) de la roue libre (7) et l'une (9a) des extrémités de cet organe souple (9).

3. Essoreuse selon la revendication 2, caractérisée en ce que la seconde extrémité (9b) de l'organe souple (9) est liée au levier (12) par un ressort de compensation (10).

4. Essoreuse selon l'une quelconque des revendications 1 à 3 caractérisée en ce que le levier de manoeuvre (12) a la forme d'un cadre entourant le bac de récupération (4) dont la traverse antérieure (12a) porte la pédale (13) et dont la traverse postérieure (12b) porte l'un (14) des points d'amarrage de l'organe souple de transmission (9).

5. Essoreuse selon l'une quelconque des revendications 1 à 4, caractérisée en ce que le fond du panier tournant (2) porte un bossage central (2a) sensiblement conique orienté pointe en haut.

FIG.1

FIG.2

Office européen
des brevets

**RAPPORT DE RECHERCHE EUROPEENNE**

**0176450**
Numéro de la demande

EP 85 42 0149

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 4) |
|---|---|---|---|
| A | BE-A- 463 194 (BOIN) <br> * En entier * <br><br> --- | 1,5 | A 47 J 43/24 |
| A | FR-A- 767 398 (MORAND) <br> * En entier * <br><br> --- | 1 | |
| A | FR-A- 696 897 (DRAPEAU) <br> * En entier * <br><br> ----- | 1 | |

**DOMAINES TECHNIQUES RECHERCHES (Int. Cl.4)**

A 47 J
D 06 F
A 47 L
B 04 B

Le présent rapport de recherche a été établi pour toutes les revendications

| Lieu de la recherche <br> LA HAYE | Date d'achèvement de la recherche <br> 18-12-1985 | Examinateur <br> SCHARTZ J. |
|---|---|---|

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82